# EUROPÄISCHE PATENTSCHRIFT

(11) **EP 1 366 394 B1**
(45) Veröffentlichungstag und Bekanntmachung des Hinweises auf die Patenterteilung: **23.11.2005**
(21) Anmeldenummer: 01965006.8
(22) Anmeldetag: 19.06.2001
(51) Int. Cl.: G05B 19/18, G05B 19/401

(54) **VERFAHREN UND VORRICHTUNG ZUM VERMESSEN UND BEARBEITEN VON WERKSTÜCKEN**
METHOD AND DEVICE FOR MEASURING AND MACHINING WORKPIECES
PROCEDE ET DISPOSITIF POUR LA MESURE ET L'USINAGE DE PIECES

(30) Priorität: 19.06.2000 DE 10030087
(43) Veröffentlichungstag der Anmeldung: 03.12.2003
(73) Patentinhaber: BOEHRINGER WERKZEUGMASCHINEN GmbH, D-73033 Göppingen (DE)
(72) Erfinder: KAISSER, Hans-Jürgen, 73072 Donzdorf (DE)
(74) Vertreter: Alber, Norbert
(86) Internationale Anmeldenummer: PCT/EP2001/006923
(87) Internationale Veröffentlichungsnummer: WO 2001/098847

(56) Entgegenhaltungen:
- EP-A- 0 314 333
- FR-A- 2 024 635
- US-A- 4 382 215
- US-A- 4 384 333
- US-A- 4 387 327
- US-A- 4 576 069
- PATENT ABSTRACTS OF JAPAN Bd. 008, Nr. 270 (M-344), 11. Dezember 1984 (1984-12-11) & JP 59 142045 A (HITACHI SEISAKUSHO KK), 15. August 1984 (1984-08-15)

## Beschreibung

### I. Anwendungsgebiet

Die Erfindung betrifft die spannende Bearbeitung von Werkstücken mit rotationssymmetrischen, insbesondere exzentrisch rotationssymmetrischen, Flächen, beispielsweise die Hublagerstellen von Kurbelwellen.

### II. Technischer Hintergrund

Kurbelwellen sind aufgrund ihrer mehrfach gekröpften Form vergleichsweise labile Werkstücke.

Da bei der Bearbeitung von Kurbelwellen in großen Stückzahlen die Herstellungskosten und damit eine möglichst kurze Bearbeitungszeit im Vordergrund steht, liegt die Tendenz auf der Hand, die notwendige Materialabnahme mittels spanender Bearbeitung möglichst schnell zu vollziehen. In der Regel steigen damit die Bearbeirtungskräfte. Gleichzeitig müssen jedoch die geforderten Toleranzen, beispielsweise hinsichtlich der Rundheitsabweichung, insbesondere bei den Hublagerstellen, aber auch bei den Mittellagerstellen, eingehalten werden.

Die theoretische Festlegung der maximal zulässigen Bearbeitungskräfte und damit der Bearbeitungsparameter ist nur teilweise möglich, so dass immer zusätzlich eine Überprüfung der Rundheitsabweichung und gegebenenfalls auch der Hubhöhe am bearbeiteten Werkstück und im Vergleich mit den zulässigen Toleranzen eine Korrektur der Bearbeitungsparameter notwendig ist.

Dieses Problem tritt bei Hublagerstellen besonders dann auf, wenn die Hublagerstellen beispielsweise mittels Fräsen und in zentrischer Aufspannung der Kurbelwelle durchgeführt wird, bei der das Fräswerkzeug der exzentrisch rotierenden Hublagerstelle in Querrichtung jeweils nachgeführt wird.

Dabei ist es bereits bekannt, die Rundheitsabweichungen der bearbeiteten Kurbelwelle im Meßlabor, also nach Ausspannen der Kurbelwelle aus der Bearbeitungsmaschine, festzustellen. Dabei treten zwei Schwierigkeiten gemeinsam auf: Zum einen müssen die festgestellten Rundheitsabweichungen in exakte Beziehung zur jeweiligen Winkelstellung der Kurbelwelle vorher in der Bearbeitungsmaschine gebracht werden, und ebenso die festzulegenden Korrekturwerte, um die Rundheit zukünftig zu verbessern.

Zusätzlich verformt sich die Kurbelwelle allein durch das Ausspannen, da die Auflagerung/Einspannung der Kurbelwelle im Meßlabor grundsätzlich eine andere ist als in der Bearbeitungsmaschine.

Weiterhin ist es bekannt, eine Meßvorrichtung direkt in der Maschine anzuordnen, so dass die Kurbelwelle in dem in der Werkzeugmaschine gespannten Zustand auf Rundheit und gegebenenfalls zusätzlich auf Hub vermessen werden kann.

Dabei wird ein Meßarm an die Kurbelwelle herangeschwenkt um eine Schwenkachse, die parallel zur Längsachse der Kurbelwelle verläuft. Der Meßarm trägt ein Prisma, welches bis zur Anlage an die zu vermessende z.B. Lagerfläche herangeführt wird. Dann wird mit einem Meßtaster, der im Zwischenwinkel des Meßprismas in der Vorrichtung vorhanden ist, der Abstand der Oberfläche des Werkstückes zum Grunde des Prismas gemessen.

Diese Vorgehensweise wird in mehreren Winkelstellungen der zu vermessenden Lagerfläche durchgeführt.

Um dies bei exzentrisch rotierenden Flächen, beispielsweise einer Hublagerfläche, durchzuführen, muss somit auch die Auskragung des Schwenkarmes jeweils verändert werden. Zu diesem Zweck besteht der Schwenkarm aus zwei wiederum gegeneinander verschwenkbaren Teilarmen.

Dies verändert jedoch nicht nur die Stellung des Auftreffwinkels des Meßprismas auf die zu vermessende Werkstückfläche, was die Ermittlung von Korrekturwerten und vor allem deren Zuordnung zu einer bestimmten Winkelstellung des Werkstückes in der Maschine erschwert. Zusätzlich ist jede der Schwenkachsen der Meßvorrichtung spielbehaftet, was die Genauigkeit des Meßergebnisses negativ beeinflusst.

Aus der US 4384333 ist es bekannt, einen Frässchlitten mit Fräswerkzeug nur quer auf das rotierende Werkstück zu verfahren, jedoch erfolgt dabei keine Vermessung der Ist-Lage des Werkstückes durch einen quer herangefahrenen Taster, sondern die Lage des Werkstückes wird lediglich durch einen Drehwinkelgeber der Werkstückspindel und der vorbekannten Ausgangs-Drehpösition des Werkstückes vorgegeben.

Weiterhin zeigt EP 0314333 eine Messvorrichtung, die direkt am Werkzeugschlitten befestigt ist und von einer deaktivierten in eine aktivierte Position verschwenkt werden kann. Die erzielte Werkstückkontur wird dabei in mehreren Richtungen vermessen, und nicht nur der Ist-Abstand in nur einer Richtung und zu einem Bezugswert ermittelt.

Gleiches gilt auch für die JP 59142045, wobei der Messtaster am Werkzeugschlitten allerdings fest montiert ist und nicht in eine deaktivierte Position verbracht werden kann.

### III. Darstellung der Erfindung

### a) Technische Aufgabe

Es ist daher die Aufgabe gemäß der vorliegenden Erfindung, ein Verfahren sowie eine Vorrichtung zu schaffen, bei der die Konturprüfung, insbesondere die Rundheitsüberprüfung von Werkstücken und ggfs. auch die Hubhöhe von Hublagerzapfen von Kurbelwellen schnell und genau durchgeführt und die Ermittlung und Winkelzuordnung von Korrekturwerten für die Werkzeuge sehr einfach ist.

### b) Lösung der Aufgabe

Diese Aufgabe wird durch die kennzeichnenden Merkmale der Ansprüche 1 und 6 gelöst. Vorteilhafte Ausführungsformen ergeben sich aus den Unteransprüchen.

Dadurch, dass der Abstand eines zu vermessenden Punktes der Werkstückkontur von einem Bezugswert immer nur in einer bestimmten Richtung ermittelt wird, dies jedoch bei einer Vielzahl von Winkelstellungen des Werkstückes, ist eine vergleichweise einfache Errechnung der Ist-Kontur des Werkstückes aus den Meßwerten und auch die Bestimmung der Lage dieser Ist-Kontur zur Drehmitte möglich. Entsprechend ist auch die Ermittlung von Korrekturwerten für die Werkzeugbewegungen möglich. Da die Meßvorrichtung dabei direkt am Werkzeugsupport, insbesondere direkt am Grundkörper des Werkzeuges, befestigt ist, können keine Ungenauigkeiten auftreten, die durch die Befestigung der Meßvorrichtung an einem anderen Teil der Werkzeugmaschine als dem Werkzeugsupport auftreten würden.

Da das Werkstück dabei in der Bearbeitungs-Aufspannung verbleiben kann, ist kein unerwünschter Einfluss durch Entspannen und Neuspannen gegeben.

Bei den Hublagerstellen einer Kurbelwelle wird somit die Ist-Kontur bestimmt und damit nicht nur deren Rundheitsabweichung, sondern auch deren Abweichung vom Sollhub.

Ein weiterer Vorteil besteht darin, dass auch die bereits bearbeitete Kurbelwelle auf diese Art und Weise mit den korrigierten Werkzeugeinstellungen nochmals mit geringem Aufwand nachbearbeitet werden kann, da die Spannung des Werkstükkes ja beibehalten wurde.

Durch die einfache Zuordnung der Korrekturwerte zu den Winkelpositionen des Werkstückes ist es auch mit geringem Aufwand möglich, für Winkelstellungen zwischen gemessenen Meß-Winkelpositionen mittels Interpolation einen Korrekturwert zu ermitteln und zukünftig zu benutzen, und dadurch die Rundheit zusätzlich zu verbessern.

Dadurch, dass die Meßvorrichtung direkt am Werkzeugsupport angeordnet ist, geht das bei den Werkzeugsupporten in X- und ggf. in Y-Richtung vorhandene Spiel ebenfalls in das Meßergebnis ein. Es ist nicht nötig, unterschiedlich, einerseits bei der Meßvorrichtung und andererseits bei der Werkzeugeinheit vorhandenes, Spiel in den Schlittensystemen zu berücksichtigen.

Aus dem gleichen Grund wird der Meßtaster z. B: in Form einer Meßfläche, vorzugsweise auch in der gleichen Radialebene wie das Werkzeug, beispielsweise der Fräser, zwischen Werkzeug und Werkstück angeordnet. Vorzugsweise erfolgt die Positionierung auf der Verbindungslinie zwischen Werkzeugmittelpunkt und Werkstückmittelpunkt in dieser Radialebene, wobei die Meßfläche eine so große Erstreckung quer, vorzugsweise im rechten Winkel, zur Meßrichtung und quer, insbesondere rechfinrinklig, zur Längsachse des Werkstückes, aufweist, dass in allen Winkellagen die zu vermessende, exzentrische Fläche von der Meßfläche abgetastet werden kann.

Dafür ist es natürlich notwendig, dass der Verlauf der Meßfläche zur Meßrichtung hinsichtlich seiner Winkelstellung exakt bekannt ist, also bei rechtwinkliger Anordnung dieser rechte Winkel exakt eingehalten ist.

Ferner ist der genaue Abstand der Meßfläche vom Werkzeugsupport, bzw. einen festen Punkt des Werkzeugsupportes, notwendig.

Sofern das zum Einsatz kommende Werkzeug kein rotierendes Werkzeug wie ein Scheibenfräser, sondern ein feststehendes Werkzeug wie etwa ein Drehmeißel ist, wird der Meßtaster, insbesondere dessen Meßfläche, auf der Verbindungslinie zwischen Werkstück, vorzugsweise dem Werkstückmittelpunkt, und der Schneide, angeordnet.

Grundsätzlich ist dabei eine Anordnung der Meßfläche möglichst nahe am Werkzeug zu bevorzugen.

Weiterhin sollte sichergestellt sein, dass der Meßtaster mit einer definierten Kraft, die vorzugsweise einen bestimmten Maximalwert nicht überschreitet, aber auch einen bestimmten Minimalwert nicht unterschreitet, beim Messen am Werkstück anliegt, vor allem um ein Verwinden des Armes der Meßvorrichtung zu vermeiden, die das Meßergebnis unmittelbar verfälschen würde.

Die Meßrichtung kann dabei entweder radial gegen die Mitte bzw. den Krümmungsmittelpunkt der zu vermessenden, rotationssymmetrischen Werkstückfläche gerichtet sein, was insbesondere der Fall ist, wenn am Meßtaster eine Meßfläche zur Verfügung steht, deren Länge den gesamten Exzentrizitätsbereich der Fläche bezüglich der C-Achse entspricht. Die Meßrichtung kann jedoch auch eine Tangentialrichtung oder gegenüber der Tangentialrichtung radial nach innen versetzte Richtung sein, in der der Meßtaster am Werkstück vorbeigeführt wird, und dadurch von der Werkstückfläche radial nach außen bezüglich der Mitte der zu vermessenden Fläche gedrückt wird. Zu diesem Zweck kann der Meßtaster entweder verschwenkbar oder linear verschiebbar beweglich an der Meßvorrichtung befestigt sein, und es können insbesondere zwei einander gegenüberliegende Meßtaster an einer Meßvorrichtung vorhanden sein, um bei einem einzigen Meßvorgang zwei gegenüberliegende Punkte der Werkstückfläche gleichzeitig vermessen zu können.

### c) Ausführungsbeispiele

Eine Ausführungsform gemäß der Erfindung ist im folgenden anhand der Figuren beispielhaft näher beschrieben. Es zeigen:
- Fig. 1a:: eine erfindungsgemäße Werkzeugmaschine mit Meßvorrichtung in der Frontansicht,
- Fig. 1b:: die Werkzeugmaschine gemäß Fig. 1a mit einer anderen Meßvor richtung in gleicher Ansicht,
- Fig 2a-c:: Detaildarstellung der Meßvorrichtung entlang der Linie II-II,
- Fig. 3:: eine Darstellung ähnlich der Figuren 2,
- Fig. 4:: einen Schnitt durch die zu vermessende rotationssymmetrische Fläche,
- Fig. 5:: eine Detaildarstellung einer anderen Meßvorrichtung,
- Fig. 6:: eine Detaildarstellung einer weiteren Bauform der Meßvorrichtung, und
- Fig. 7:: eine Detaildarstellung einer doppelten Meßvorrichtung.

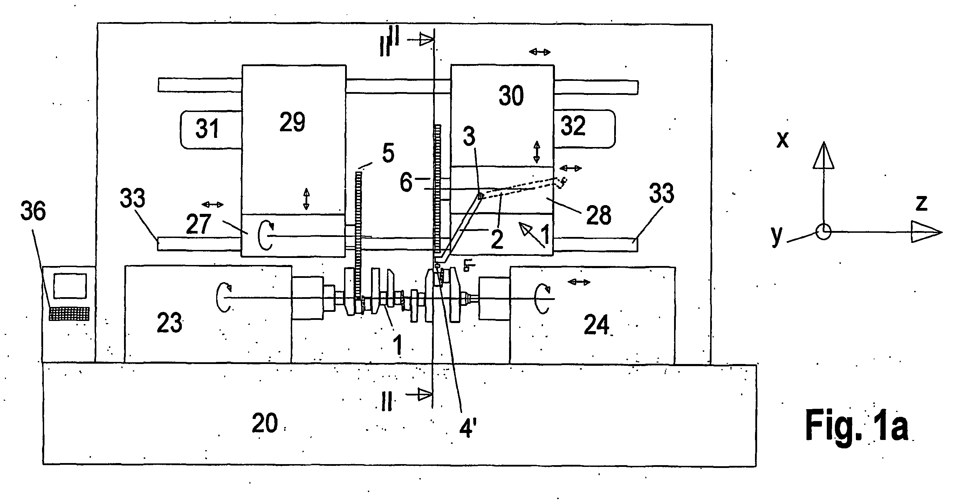

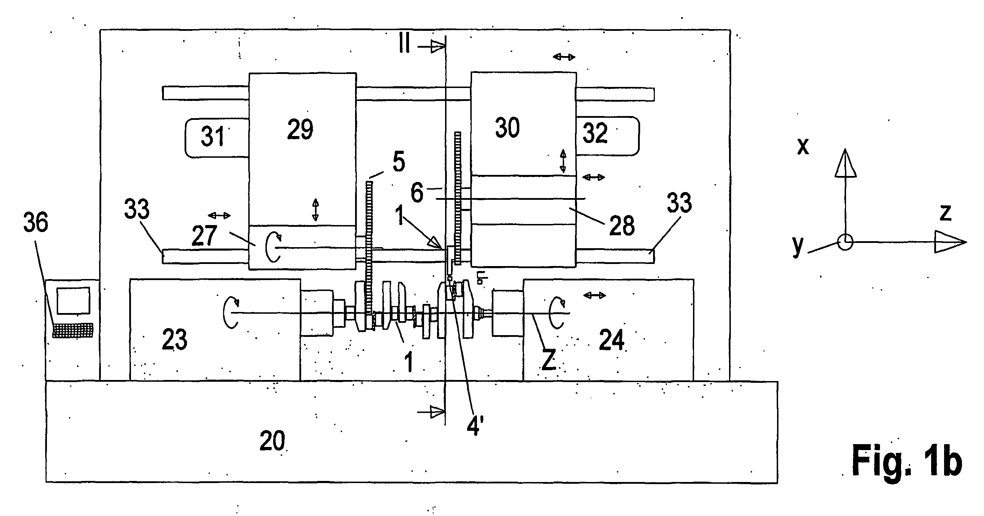

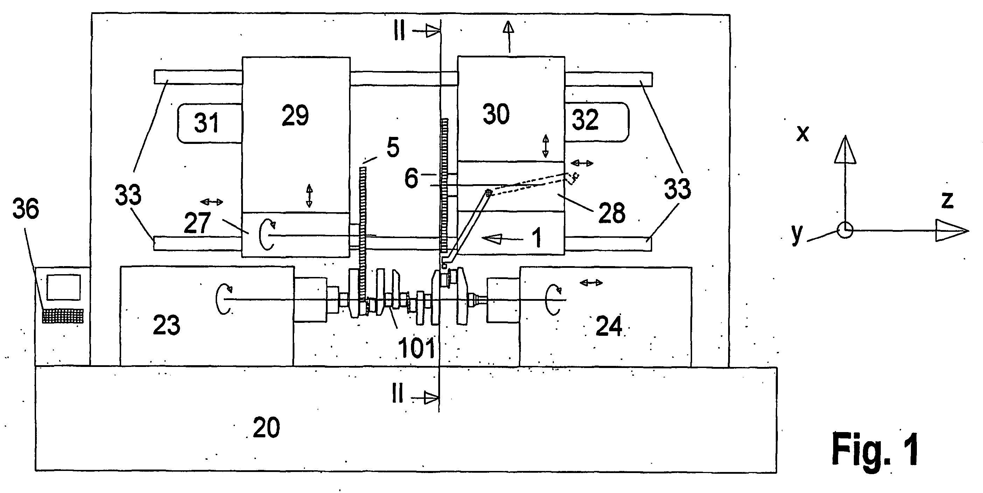

Fig. 1 zeigt eine Kurbeiwellenfräsmaschine mit Blick in Y-Richtung, also horizontal und quer zur Längserstreckung (Z-Richtung der Kurbelwelle).

Die Kurbelwelle ist mit ihren beiden Enden, also auf ihrer Hauptlagerachse, in Spannfuttern 21, 22 aufgenommen, die Bestandteil der synchron antreibbaren Spindelstöcke 23, 24 sind.

Die Spindelstöcke 23, 24 sind auf dem Bett 20 angeordnet und können in Z-Richtung verschiebbar sein zur Aufnahme unterschiedlich langer Kurbelwellen.

Die Werkzeugmaschine weist zwei getrennte Bearbeitungseinheiten 25, 26 auf, die jeweils einen Z-Schlitten 29, 30 umfassen, welcher entlang von Längsführungen 33 in Z-Richtung verfahrbar ist.

Auf dem Z-Schlitten 29, 30 ist jeweils ein X-Schlitten 27, 28 in X-Richtung verfahrbar angeordnet.

Auf den einander zugeordneten Stimseiten der X-Schlitten 27, 28 ist jeweils ein Scheibenfräser 5, 6 drehend angetrieben, beispielsweise mittels jeweils eines Motors 31, 32 angeordnet.

Positions- und Bewegungsparameter sowohl der Kurbelwelle 1 als auch der Werkzeugeinheiten 5, 6 werden über eine Maschinensteuerung 35 gesteuert. Die entsprechenden Parameter können über eine Eingabeeinheit, beispielsweise eine Tastatur 36, verändert werden.

Dabei sind die Scheibenfräser 5, 6, also die Werkzeugeinheiten, nur in einer Querrichtung, nämlich der X-Richtung, bzgl. des Werkstückes 1 verfahrbar.

Während der Bearbeitung rotiert die Kurbelwelle also das Werkstück 1, um die Z-Achse langsam, während der jeweilige rotierend angetriebene Scheibenfräser 5, 6 an einem der Hublager, z.B. H₁, oder auch an einem der Mittellager ML im Einsatz ist.

Bei Einsatz an einem Hublager H ist wegen der Exzentrizät der Hublager eine ständige Nachführung des Fräsers 5 bzw. 6 in X-Richtung entsprechend der momentanen Drehlage des Werkstückes 1 notwendig. Entsprechend liegt auch der Kontaktpunkt zwischen Werkzeug und Werkstück nicht immer exakt auf Höhe der durch die Mitte des Fräsers einerseits und die Rotationsachse des Werkstückes andererseits definierten Ebene, sondern je nach Drehlage der Kurbelwelle auch darüber oder darunter.

In Fig. 1 ist die linke Werkzeugeinheit 25 im Einsatz dargestellt, wobei also der Scheibenfräser 5 an der Hublagerstelle H₁, fräst. Beim Eintauchen kann dabei der Scheibenfräser 5 auch bereits die angrenzende Wangenseitenfläche gefräst haben. Vorzugsweise entspricht die Breite - in Z-Richtung gemessen - des Scheibenfräsers 5 etwa der Breite der zu bearbeitenden Lagerstelle.

Während in Fig. 1 nur an der rechten Bearbeitungseinheit 26 eine Meßvorrichtung 1, wie im folgenden näher beschrieben, eingezeichnet ist, kann jede der Bearbeitungseinheiten mit einer solchen Meßvorrichtung ausgestattet sein, in der Praxis und aus Kostengründen und wegen der Vermeidung zusätzlicher Kalibrierungen wird in der Regel nur eine Meßvorrichtung an nur einer Bearbeitungseinheit vorhanden sein.

Die Meßvorrichtung 1 umfasst in Fig. 1a einen Meßarm 2, der zwischen einer Arbeitslage und einer Ruhelage verlagerbar ist.

Da der Meßarm 2 an der das Werkzeug unmittelbar tragenden Einheit, in diesem Falle also dem X-Schlitten 28, angeordnet ist, erfolgt die Verlagerung durch Verschwenken um eine Schwenkachse 3 gegenüber dem X-Schlitten 28. Die Schwenkachse 3 verläuft dabei quer, vorzugsweise rechtwinklig, zur Rotationsachse der Kurbelwelle 1, also zur Z-Richtung, und parallel oder quer, insbesondere rechtwinklig, zur Meßfläche 4 des Meßtasters.

Deshalb ist der Meßarm 2 auf der dem Werkstück zugewandten Seite des X-Schlittens 28 schwenkbar angeordnet. Am freien Ende des gekröpften Meßarmes 2 ist ein Meßbalken 4' mit einer dem Werkstück zugewandten Meßfläche 4 angeordnet, die mit dem Meßarm 2 über einen Taster 7 verbunden ist. Der Meßbalken 4' kann somit mit Hilfe des X-Schlittens 28 eine Positionierbewegung 11 in der X-Richtung durchführen. Der Taster 7 ist in der Lage, Verlagerungen des Meßbalkens 4' in Meßrichtung 10, die mit der Positionierbewegung 11 identisch ist, der X-Richtung, aufzunehmen.

In Fig. 1a ist die Meßvorrichtung 1 in durchgezogenen Linien in der Arbeitslage dargestellt. Dabei befindet sich der Meßbalken 4' zwischen dem Scheibenfräser 6 und dem Werkstück. Durch Verschwenken um die Schwenkachse 3 kann der Meßarm 2 und damit die gesamte Meßvorrichtung 1 vollständig aus dem Arbeitsbereich des Scheibenfräsers 6 herausgeschwenkt werden in eine Ruhelage, in der sich vorzugsweise der Meßbalken 4' auf der von dem Scheibenfräser 6 abgewandten Seite des X-Schlittens 28 befindet.

Fig. 1b unterscheidet sich von der Fig. 1a dadurch, dass die Meßvorrichtung 1 nicht am X-Schlitten 28, sondern direkt an z. B. der Stimfläche des rotierbaren Scheibenfräsers 6 angeordnet ist.

Bei stillstehendem Scheibenfräser 6 kann somit eine Positionierbewegung 11 mit Hilfe des X-Schlittens 28 in der X-Richtung vollzogen werden. Allerdings ist durch Drehen des Scheibenfräsers 6 in eine definierte Drehlage zusätzlich eine Verlagerung der Meßvorrichtung 1 in Y-Richtung möglich. Die Meßvorrichtung in Fig. 1b umfasst wiederum einen Meßbalken 4', wie anhand Fig. 1a beschrieben, kann jedoch auch anders ausgebildet sein, wie im folgenden noch erläutert.

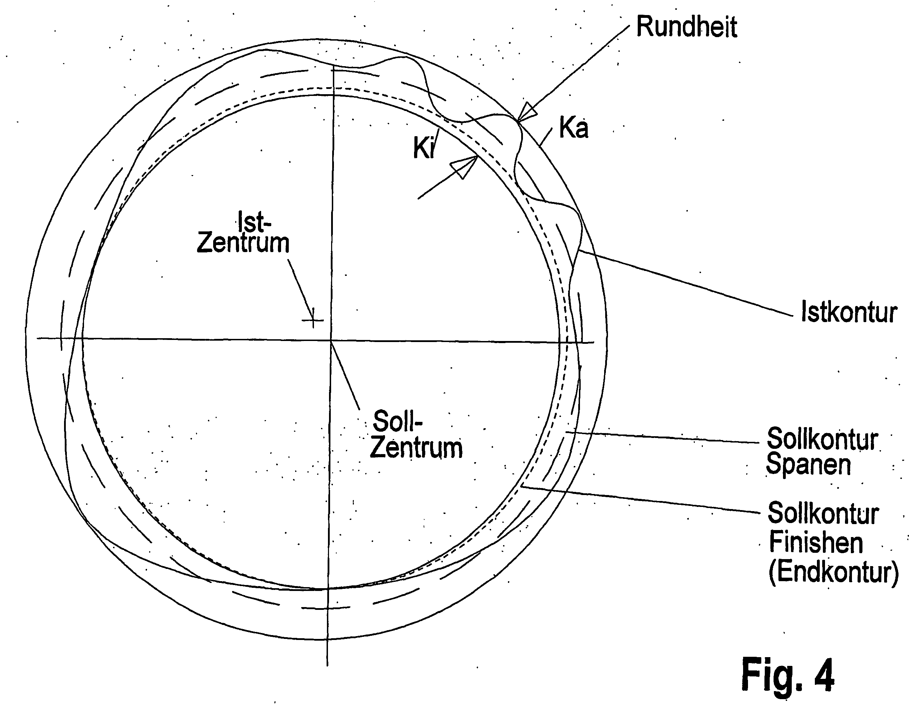

Fig. 4 zeigt in einer symbolhaften, übertriebenen Darstellung, wie die Ist-Kontur von der Soll-Kontur, wie sie nach dem Spanen bestehen sollte, abweichen kann: Die Ist-Kontur ist keine vollständige Kreiskontur, sondern weist lang- oder kurzwellige Erhebungen und Senken auf. In diese unregelmäßige Ist Kontur kann ein maximal großer innerer Kreis KI hineingelegt werden und ein maximal kleiner äußerer Kreis KA außen angelegt werden, welche konzentrisch zueinander verlaufen und einerseits das Maß der Unrundheit in radialer Richtung bestimmen, sowie andererseits das Ist-Zentrum der vorhandenen Werkstückkontur, welches in der Regel nicht mit dem Soll-Zentrum übereinstimmt.

Gerade bei der Ermittlung des Ist-Hubes gegenüber dem Soll-Hub der Hublagerstellen von Kurbelwellen überlagern sich beide Einflüsse, also die Unrundheit und die Abweichung des Ist-Zentrums vom Soll-Zentrum.

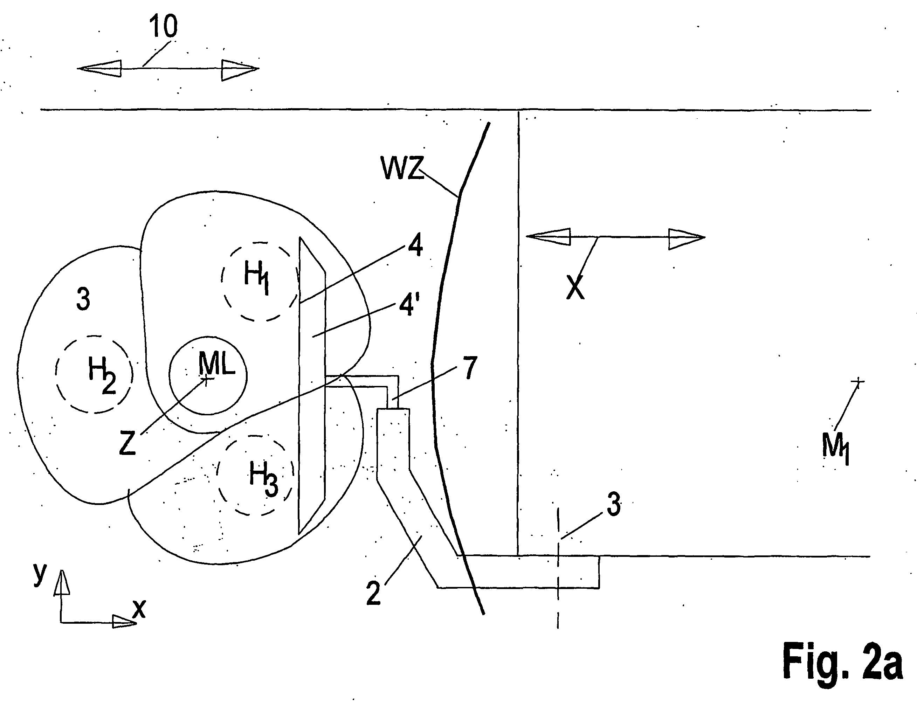

In den Figuren 2a-2c ist dargestellt, wie der Meßbalken 4' mit seiner Meßfläche 4 - wenn sich die Meßvorrichtung 1 in Arbeitslage befindet - durch Verfahren des X-Schlittens 28 in der Meßrichtung 10, z. B. der X-Richtung, gegen die zu ver messende Hublagerstelle H₁ verfahren wird, was in unterschiedlichen Meßpositionen, also Drehlagen, der Kurbelwelle und damit der Hublagerstelle H₁ nacheinander durchgeführt wird:

In ihrer Y-Position befindet sich dabei der Meßbalken 4' mit seiner Meßfläche 4 immer in der gleichen Position.

Nur in zwei Drehlagen der Kurbelwelle 101 wird somit die Hublagerstelle H₁ gegen die Meßfläche 4 in deren Mitte, in der sie am Taster 7 gelagert ist, drücken.

In allen anderen Fällen wird der Kontaktpunkt außerhalb der Mitte der Meßfläche 4 liegen, jedoch vom Meßtaster 7 gleichwohl der Abstand des Kontaktpunktes zwischen der zu vermessenden Fläche, beispielsweise der Lagerfläche des Hublagers H₁, und der Meßfläche 4 von einem definierten Punkt am Eckschlitten 28, beispielsweise der Rotationsachse des Scheibenfräsers 6, ermittelt werden.

Da zusätzlich auch seitens der Maschinensteuerung die Position der C-Achse, also die Drehlage der Kurbelwelle 101, der beim Vermessen nicht drehenden sondern stillstehenden Kurbelwelle 101 bekannt ist, und zusätzlich beim kontaktieren der zu vermessenden Fläche durch die Meßfläche 4 auch die X-Position des X-Schlittens 28, kann - da ja je nach Winkellage der Kurbelwelle auch jeweils ein anderer Punkt der Mantelfläche des Hublagerzapfens A₁, von der Meßfläche 4 kontaktiert wird - für jeden einzelnen Meßvorgang ermittelt werden, ob und wieviel die Ist-Position des Meßpunktes von der auf einer exakt runden Sollkontur liegenden Sollposition abweicht.

Daraus lässt sich für jede Drehlage der einzelnen Messpositionen ein Korrekturwert für die Werkzeugposition ermitteln, also ein Wert, um den in dieser Drehlage der Kurbelwelle das Werkzeug und damit der X-Schlitten 28 weiter oder weniger weit in X-Richtung gegen das Werkstück verfahren werden muss, um an dieser Stelle die Rundheit zu verbessern.

Durch Erstellen von Korrekturwerten für jede einzelne Meßposition und sogar - mittels Interpolation - durch Ermitteln von Korrekturwerten zwischen den Messpositionen kann auf diese Art und Weise die Rundheit der rotationssymmetrischen Fläche, in diesem Fall des Hublagerzapfens H₁, verbessert werden.

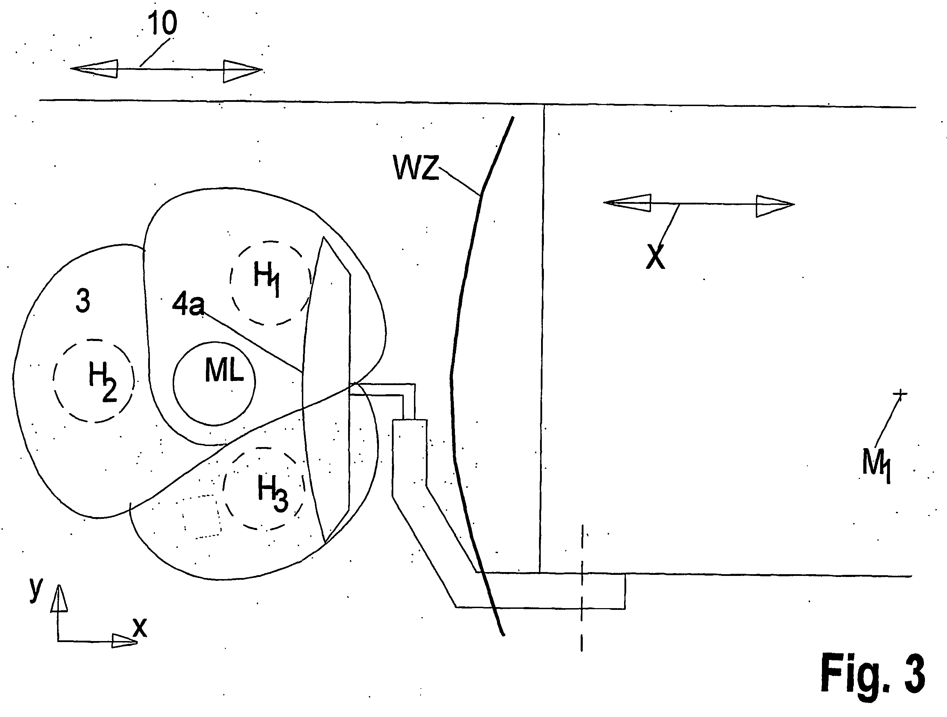

Eine besonders einfach Ermittlung der Korrekturwerte wird dann möglich, wenn die Meßfläche 4 keine ebene Fläche, sondern eine analog zur Werkzeugkontur bogenförmig gekrümmte Fläche ist, die in Meßrichtung 10 um einen bestimmten Wert - in der Arbeitslage - von der Werkzeugkontur beabstandet ist, wie dies in Fig. 3 für eine Meßposition dargestellt ist.

Dies hat den Vorteil, dass wegen der Parallellage von Meßfläche 4a und der Kontur des Scheibenfräsers 6, der Kontaktpunkt der Meßfläche 4a am Hublager zapfen 1 beim Messen derselbe Kontaktpunkt ist, wie beim Bearbeiten durch den Fräser 6 in der gleichen Winkellage der Kurbelwelle 101. Für die Ermittlung des Korrekturwertes sind somit lediglich der X-Versatz zwischen Meßfläche 4a und Scheibenfräser 6 zu berücksichtigen.

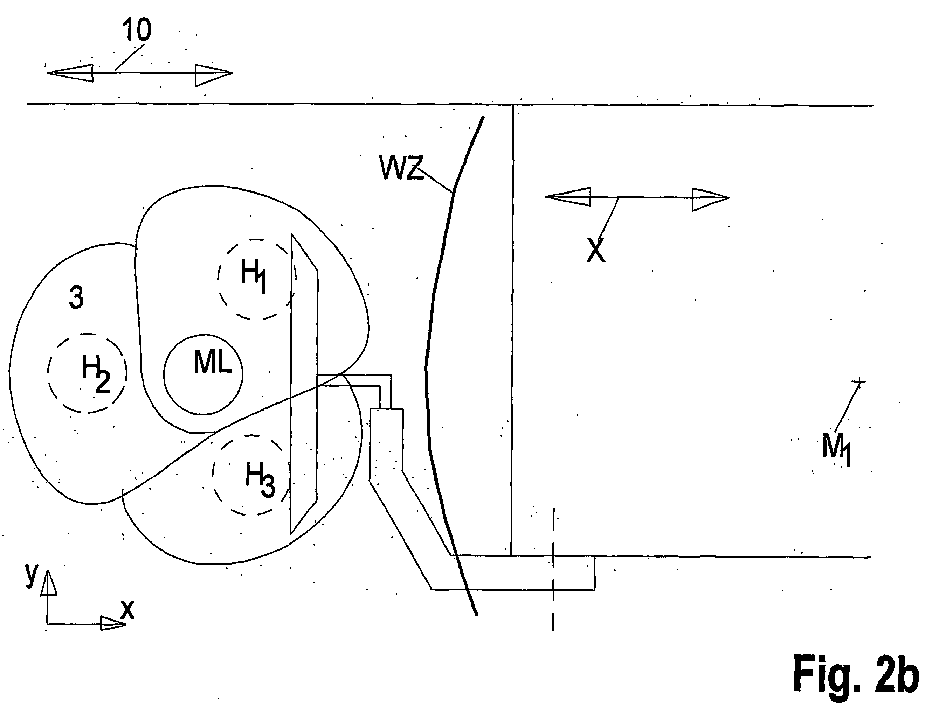

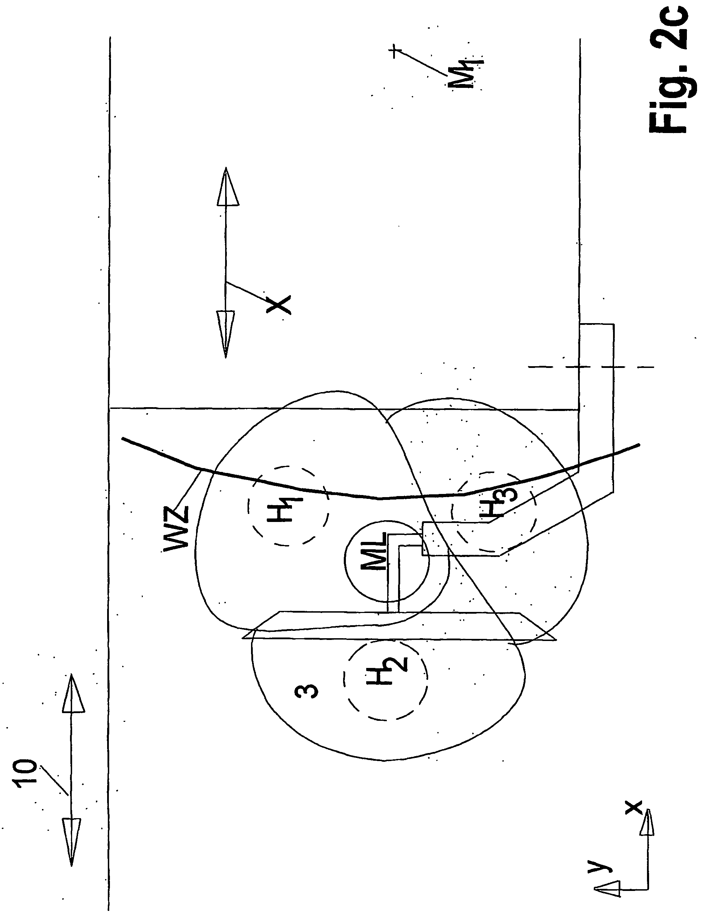

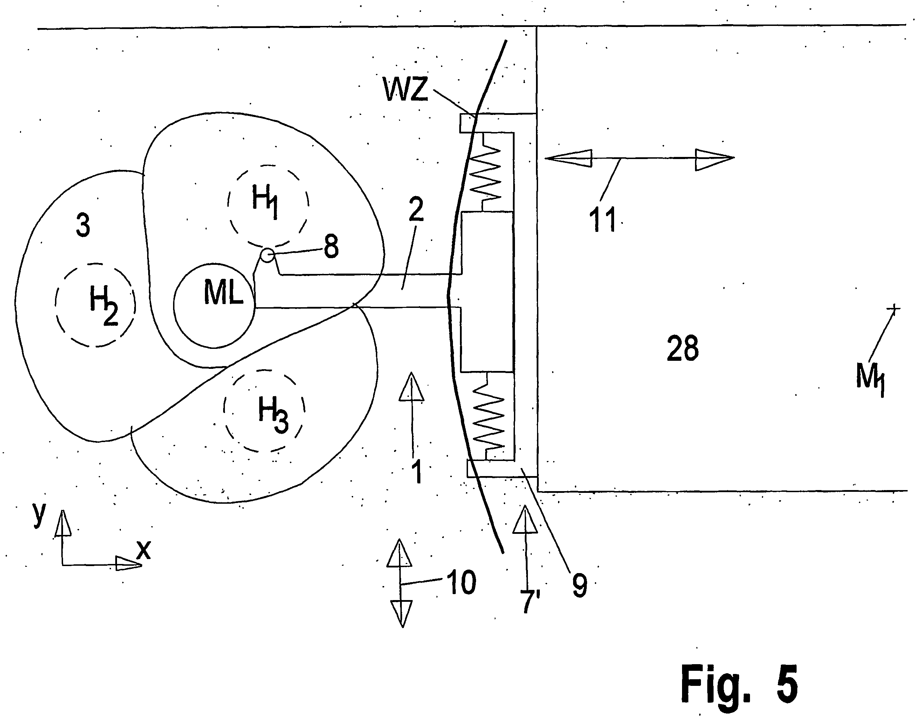

Die Figuren 5-7 zeigen Meßvorrichtungen, die sich von den Lösungen der Figuren 2 dadurch unterscheiden, dass hier die Meßrichtung 10, also die geometrische Richtung, in der ein Meßwert ermittelt wird, nicht mit der Positionierbewegung 11 übereinstimmt, in der die Meßvorrichtung 1 zwecks Durchführung des Meßvorganges bewegt wird.

Bei der Lösung gemäß Fig. 5 ist die Meßvorrichtung 1 ebenfalls am X-Schlitten 28 befestigt, und wird mit dessen Hilfe bewegt. Die Positionierbewegung 11 stimmt somit mit der X-Richtung überein.

Der Meßarm 2, der die Meßspitze 8 trägt, ist jedoch entlang einer Führung 9 verlagerbar, die in Y-Richtung verlaufend am X-Schlitten 28 befestigt ist. Diese Führung 9 mit nicht dargestellten, daran angeordneten Sensoren stellt somit den Meßtaster 7' dar, der entsprechend auch nur Verlagerungen des Meßarmes 2 in Meßrichtung 10, die dann die Y-Richtung ist, feststellen kann. Entsprechend kragt der Meßarm 2 quer zur Meßrichtung 10, nämlich in Richtung der Positionierbewegung 11, aus, und quer zu dem Meßarm ragt dessen Meßspitze 8 ab.

Durch Verfahren des Meßschlittens 28 in X-Richtung wird somit die Meßspüze 8 des Meßarmes 2, sofern sie auf die Kontur des zu vermessenden z. B. Hublagerzapfens H₁ trifft, von dessen Kontur in Meßrichtung 10 abgedrängt, und dadurch der Punkt der stärksten Auslenkung des Meßarmes 2 in Meßrichtung 10 in der zugrundeliegenden Drehlage des Werkstückes ermittelt. Für die Bestimmung eines Meßwertes in anderen Drehlagen des Werkstückes an derselben Werkstückkontur kann eine andere Grobpositionierung der Meßvorrichtung 1 an der Werkzeugeinheit in Y-Richtung notwendig werden.

Das Heranfahren der Meßspitze 8 in Richtung der Positionierbewegung kann bei Stillstand des Werkstückes, z. B. der Kurbelwelle, erfolgen, und somit mehrfach bei in unterschiedlichen Drehlagen stillgesetzter Kurbelwelle.

Das Vermessen kann jedoch auch bei drehendem Werkstück, z. B. drehender Kurbelwelle, erfolgen, wobei dann die Meßspitze 8 jedoch in Richtung der Positionierbewegung 11 mit der zu vermessenden Werkstückfläche in X-Richtung und ggf. auch grob in Y-Richtung nachgeführt werden muß. Dadurch kann zwar einerseits der gesamte Umfang der zu vermessenden Kontur vermessen werden, nachteilig könnte jedoch sein, daß der in Meßrichtung 10 nicht immer höchstliegende Punkt vennessen wird, beispielsweise weil eine vorher nicht bekannte Abweichung im Hinblick auf Rundheit oder Exzentrizitätslage der zu vermessenden Fläche vorlag.

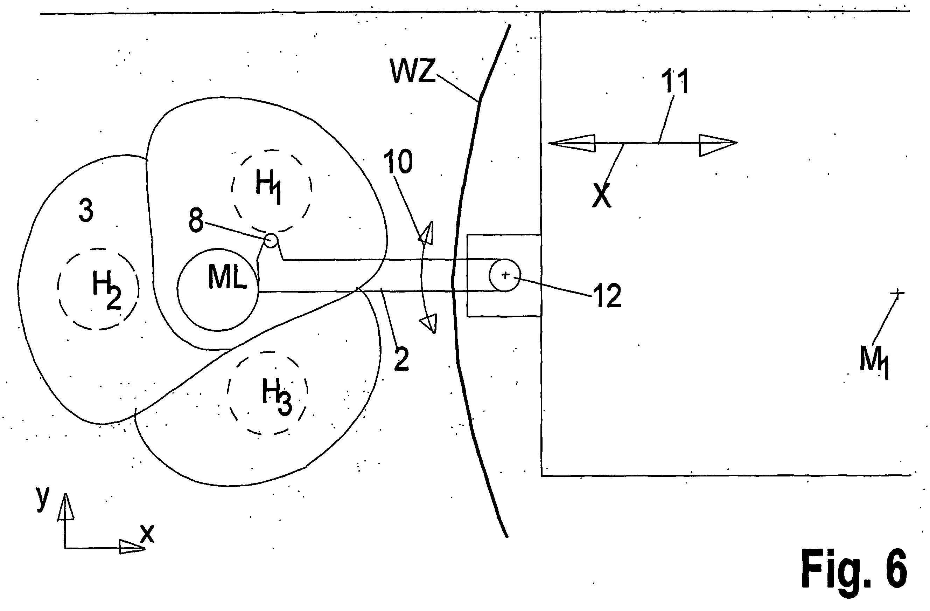

Die Lösung gemäß Fig. 6 unterscheidet sich von derjenigen der Fig. 5 dadurch, dass hier der Meßarm 2 nicht linear verlagerbar, sondern bezüglich einer Schwenkachse 12, die quer zur Positionierbewegung 11 und parallel zur Z-Achse verläuft, verschwenkbar ist. Die daraus resultierende Meßrichtung der Meßspitze 8 ist somit ebenfalls keine Linearbewegung, sondern eine bogenförmige Bewegung. Aus dem Schwenkwinkel des Meßarmes 2 - welcher ebenfalls wie der Meßarm 2 der Fig. 6 in eine Null-Lage vorgespannt ist - läßt sich der Meßwert, nämlich der - in diesem Fall in die negative Y-Richtung - am weitesten vorstehende Punkt der Hublagerstelle H₁ - ebenfalls bestimmen, wofür selbstverständlich die Lage der Meßspitze 8 bezüglich der Schwenkachse 12 hinsichtlich Abstand und Winkel in der Ruhelage bekannt sein muß.

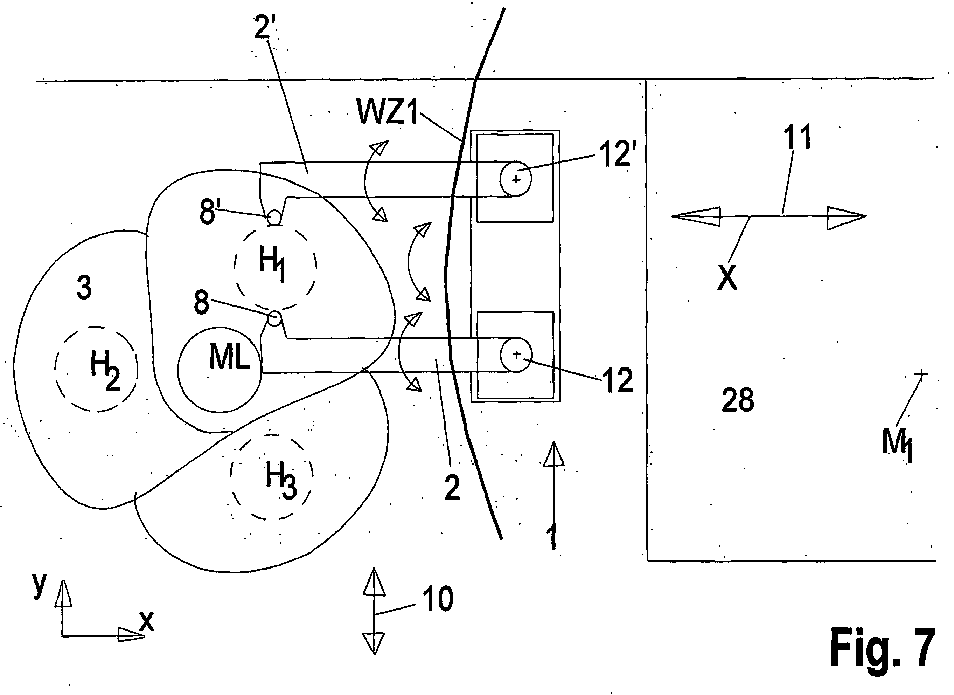

Fig. 7 zeigt eine Lösung ähnlich Fig. 6, die in zwei wesentlichen Punkten hiervon abweicht: Zum Einen ist die Meßvorrichtung 1 gemäß Fig. 6 hier doppelt, gespiegelt, ausgebildet. Die beiden Meßspitzen 8, 8' sind gegeneinander gerichtet, und daher in der Lage, die beiden Seiten einer kreisförmigen Werkstückkontur gleichzeitig zu vermessen. Dies wäre statt mit schwenkbaren Meßarmen 2, 2' auch mit linear verschiebbaren Meßarmen gemäß Fig. 5 möglich.

Zusätzlich ist die Meßvorrichtung 1 nicht am X-Schlitten 28, sondern direkt am scheibenförmigen, drehbaren Werkzeug, beispielsweise dem Scheibenfräser 6 gemäß Fig. 1, befestigt. Entsprechend kann durch Drehung des Werkzeuges WZ auch die Meßvorrichtung 1 zusätzlich in ihrer Y-Position verlagert werden, was jedoch auch eine Verlagerung der Winkellage des Meßarmes 2 bzw. 2' bezüglich seiner Schwenkachse 12 bzw. 12' nach sich zieht. Unabhängig davon ist die Positionierbewegung 11 immer die Bewegungsrichtung des die Einheit tragenden Schlittens, in diesem Fall aufgrund des X-Schlittens 28 die X-Richtung.

Eine solche doppelte Lösung halbiert den Zeitaufwand beim Vermessen einer rotationssymmetrischen Werkstückkontur auf die Hälfte, und vermeidet zusätzlich das Neupositionieren der gesamten Meßvorrichtung in einer anderen Y-Position beispielsweise am X-Schlitten 28, um die Veränderung der Y-Lage des zu vermessenden Hublagerzapfens, z. B. H₁ , bei Drehung der Kurbelwelle in die einzelnen Meßpositionen auszugleichen.

### BEZUGSZEICHENLISTE

- 1: Meßvorrichtung
- 2: Meßarm
- 3: Schwenkachse
- 4: Meßfläche
- 4': Meßbalken
- 5: Scheibenfräser
- 6: -"-
- 7: Taster
- 8: Meßspitze
- 9: Führung
- 10: Meßrichtung
- 11: Positionierbewegung
- 12: Schwenkachse
- 13 14 15 16 17 18 19 20: Bett
- 21: Spannungsfutter
- 22: - " -
- 23: Spindelstock
- 24: -"-
- 25: Bearbeitungseinheit
- 26: -"-
- 27: X-Schlitten
- 28: -"-
- 29: Z-Schlitten
- 30: -"-
- 31: Motor
- 32: -"-
- 101: Werkstück

## Patentansprüche

1. Verfahren zum spanenden Bearbeiten und Vermessen von Werkstücken (101) mit rotationssymmetrischen, zentrischen oder exzentrischen, Flächen, insbesondere an Kurbelwellen, und davon abhängigem, insbesondere automatischem, Korrigieren der Werkzeug-Sollpositionen bezüglich der Werkzeugmaschine für eine Vielzahl von Arbeitspunkten am Werkstück (101),
**dadurch gekennzeichnet, daß**
- mittels eines Meßtasters (7) nur der maximale Ist-Abstand der zu vermessenden Werkstück-Kontur, z. B. einer Hublagerfläche (H₁₎, in einer Messrichtung (10), z. B. der X-Richtung, von einem Bezugswert, z. B. der Drehmitte, für jede Meß-Winkelposition des Werkstückes (101) ermittelt wird,
- für jede Meß-Winkelposition die gemessene Abweichung zwischen Ist-Abstand und Soll-Abstand ermittelt wird, und
- wenigstens für die Meß-Winkelpositionen die jeweiligen Werkzeug-Sollpositionen automatisch um einen Korrekturwert, der aus der jeweiligen gemessenen Abweichung automatisch errechnet wird, korrigiert werden.

2. Verfahren nach Anspruch 1
**dadurch gekennzeichnet, daß**
das Werkstück (101) während der Vermessung in der Bearbeitungs-Aufspannung verbleibt.

3. Verfahren nach Anspruch 1 oder 2,
**dadurch gekennzeichnet, daß**
Korrekturwerte zusätzlich für zwischen den Meß-Winkelpositionen liegende Zwischenpositionen mittels Interpolation bestimmt und die Korrektur durchgeführt wird.

4. Verfahren nach einem der vorhergehenden Ansprüche
**dadurch gekennzeichnet, daß**
der Meßtaster (7) mit Hilfe des das Werkzeug direkt tragenden Schlittens (27,28) oder des Werkzeuges (WZ) bewegt wird.

5. Verfahren nach einem der vorhergehenden Ansprüche
**dadurch gekennzeichnet, daß**
das Werkzeug nur in einer Richtung, insbesondere in der Meßrichtung (10) oder einer hierzu quer verlaufenden Positionierbewegung, verfahren wird.

6. Werkzeugmaschine mit
- wenigstens einer Spindel (23,24) zur Aufnahme und zum Drehantrieb des Werkstückes (101), um die Z-Achse auf Drehmitte,
- wenigstens einer Bearbeitungseinheit (25,26) zur Bewegung des Werkzeuges, beispielsweise eines Scheibenfräsers (5,6), wenigstens in X-Richtung in Abhängigkeit von der Drehlage der Werkstückspindel (C-Achse) und
- einer Meßvorrichtung (1), insbesondere Rundheits-Meßvorrichtung,
- einer Maschinesteuerung (35), die Positions- und Bewegungsparameter sowohl des Werkstückes als auch der Werkzeugeinheiten steuert,
**dadurch gekennzeichnet, daß**
- die Messvorrichtung (1) Mittel aufweist, mittels eines Messtasters (7) nur den maximalen Ist-Abstand der zu vermessenden Werkstückkontur von einem Bezugswert, z. B. der Drehmitte, für jede Mess-Winkelposition des Werkstückes (101) zu ermitteln und für Mess-Winkelposition die gemessene Abweichung zwischen Ist-Abstand und Soll-Abstand zu ermitteln und
- die Maschinensteuerung (35) Mittel aufweist, wenigstens für die Mess-Winkelpositionen die jeweiligen Werkzeug-Sollpositionen automatisch um einen Korrekturwert, der aus der jeweiligen gemessenen Abweichung automatisch errechnet wird, zu korrigieren, wobei
- die Meßvorrichtung (1) direkt am Werkzeugsupport angeordnet ist.

7. Werkzeugmaschine nach Anspruch 6,
**dadurch gekennzeichnet, daß**
die Meßvorrichtung (1) direkt am Werkzeug (WZ) des Werkzeug-Supports angeordnet ist.

8. Werkzeugmaschine nach einem der vorhergehenden Ansprüche
**dadurch gekennzeichnet, daß**
die Meßvorrichtung (1) direkt an dem das Werkzeug (WZ) unmittelbar tragenden X-Schlitten (27,28) angeordnet ist.

9. Werkzeugmaschine nach Anspruch 8,
**dadurch gekennzeichnet, daß**
die Meßvorrichtung (1) am Werkzeugsupport befestigt und zwischen einer Arbeitslage und einer Ruhelage insbesondere automatisch verlagerbar, insbesondere verschwenkbar, ist.

10. Werkzeugmaschine nach einem der vorhergehenden Vorrichtungsansprüche,
**dadurch gekennzeichnet, daß**
die Meßvorrichtung (1) eine Meßfläche (4) am Meßbalken (4') und damit am Meßtaster (7) aufweist, welche im rechten Winkel zur Z-Achse und im rechten Winkel zur Meßrichtung (10), die insbesondere die X-Richtung ist, ausgerichtet ist.

11. Werkzeugmaschine nach einem der vorhergehenden Vorrichtungsansprüche,
**dadurch gekennzeichnet, daß**
der Meßtaster (7) mit der Meßfläche (4) in einer definierten, festen Position zum Werkzeugsupport in Meßrichtung (10) angeordnet ist.

12. Werkzeugmaschine nach einem der vorhergehenden Vorrichtungsansprüche,
**dadurch gekennzeichnet, daß**
bei Verwendung eines Scheibenfräsers (5,6) als Werkzeug die Meßfläche (4,4a) in der Ebene des scheibenförmigen Grundkörpers des Werkzeuges (WZ) oder hierzu axial versetzt, radial außerhalb des Scheibenfräsers (5,6) in der Arbeitsposition angeordnet ist.

13. Werkzeugmaschine nach einem der vorhergehenden Vorrichtungsansprüche,
**dadurch gekennzeichnet, daß**
bei verschwenkbarem Meßarm (2) der Meßarm (2) um eine Schwenkachse (3) verschwenkbar ist, die quer zur Meßrichtung (10) und quer zur Z-Richtung verläuft.

14. Werkzeugmaschine nach einem der vorhergehenden Vorrichtungsansprüche,
**dadurch gekennzeichnet, daß**
das Werkzeug ein Drehrevolver oder Drehräumrevolver ist und die Meßfläche in der Ebene des Revolvers radial außerhalb der Werkzeuge in der Arbeitsposition angeordnet ist.

15. Werkzeugmaschine nach einem der vorhergehenden Vorrichtungsansprüche,
**dadurch gekennzeichnet, daß**
die Meßfläche z.B. 4a mit ihrer Kontur parallel zu der in Meßrichtung weisenden Außenkontur des zugeordneten Werkzeuges geformt und angeordnet ist.

## Claims

1. A method of cutting machining and measuring workpieces (101) with rotationally symmetrical, concentric or eccentric surfaces, in particular on crankshafts, and, in dependence thereon and in particular automatically, correcting the tool reference position with respect to the machine tool for a plurality of working points on the workpiece (101),
**characterised in that**
- by means of a measuring sensor (7), only the maximum actual spacing of the workpiece contour to be measured, for example a big-end bearing surface (H₁) in a measuring direction (10), for example the X-direction, from a reference value, for example the center of rotation, is ascertained for each measurement angular position of the workpiece (101),
- for each measurement angular position, the measured deviation between the actual spacing and the reference spacing is ascertained, and
- at least for the measurement angular positions the respective tool reference position is automatically corrected by a correction value which is automatically calculated from the respective measured deviation.

2. A method as set forth in claim 1 **characterised in that** the workpiece (101) remains in the machining clamping arrangement during the measurement procedure.

3. A method as set forth in claim 1 or claim 2 **characterised in that** correction values are additionally determined by means of interpolation for intermediate positions between the measurement angular positions and the correction operation is carried out.

4. A method as set forth in one of the preceding claims **characterised in that** the measuring sensor (7) is moved by means of the slide (27, 28) directly carrying the tool, or by means of the tool (WZ).

5. A method as set forth in one of the preceding claims **characterised in that**
- the tool is displaceable only in one direction, in particular in the measuring direction (10) or a positioning movement which is transverse with respect thereto.

6. A machine tool with
- at least one spindle (23, 24) for receiving and rotationally driving the workpiece (101) about the Z-axis on the center of rotation,
- at least one machining unit (25, 26) for moving the tool, for example a-milling disk (5, 6), at least in the X-direction in dependence on the rotational position of the workpiece spindle (C-axis), and
- a measuring device (1), in particular a roundness measuring device,
- a machine control (35) which controls the positional and motion parameters of both the workpiece as well as the tool units,
**characterised in that**
- the measuring device (1) shows means by means of a measuring sensor (7) of ascertaining only the maximum actual spacing of the workpiece contour to be measured from a reference value, for example the center of rotation, for each measurement angular position of the workpiece (101) and of ascertaining for each measurement angular position, the measured deviation between the actual spacing and the reference spacing and
- the machine control (35) shows means, at least for the measurement angular positions, of automatically correcting the respective tool reference position by a correction value which is automatically calculated from the respective measured deviation, whereby
- the measuring device (1) is arranged directly on the tool support.

7. A machine tool as set forth in claim 6 **characterised in that** the measuring device (1) is arranged directly on the tool (WZ) of the tool support.

8. A machine tool as set forth in claim 6 **characterised in that** the measuring device (1) is arranged directly on the X-slide (27, 28) which directly carries the tool (WZ).

9. A machine tool as set forth in claim 8 **characterised in that** the measuring device (1) is fixed to the tool support and is in particular automatically displaceable, in particular pivotable, between a working position and a rest position.

10. A machine tool as set forth in one of the preceding apparatus claims **characterised in that** the measuring device (1) has a measuring surface (4) on the measuring bar (4') and thus on the measuring sensor (7), which measuring surface is oriented at a right angle to the Z-axis and at a right angle to the measuring direction (10) which in particular is the X-direction.

11. A machine tool as set forth in one of the preceding apparatus claims **characterised in that** the measuring sensor (7) with the measuring surface (4) is arranged in a defined fixed position with respect to the tool support in the measuring direction (10).

12. A machine tool as set forth in one of the preceding apparatus claims **characterised in that** when using a milling disk (5, 6) as the tool the measuring surface (4, 4a) is arranged in the plane of the disk-shaped main body of the tool (WZ) or axially displaced in relation thereto, radially outwardly of the milling disk (5, 6), in the working position.

13. A machine tool as set forth in one of the preceding apparatus claims **characterised in that**, with a pivotable measuring arm (2), the measuring arm (2) is pivotable about a pivot axis (3) which extends transversely with respect to the measuring direction (10) and transversely with respect to the Z-direction.

14. A machine tool as set forth in one of the preceding apparatus claims **characterised in that** the tool is a turning revolver turret or a turning broaching revolver turret and the measuring surface is arranged in the plane of the revolver turret radially outside the tools in the working position.

15. A machine tool as set forth in one of the preceding apparatus claims **characterised in that** the measuring surface, for example 4a, is shaped and arranged with its contour parallel to the outside contour of the associated tool, said outside contour facing in the measuring direction.

## Revendications

1. Procédé pour l'usinage par enlèvement de copeaux et la mesure de pièces à usiner 8101) avec des surfaces symétriques en rotation, centriques ou excentriques, en particulier des vilebrequins et pour la correction dépendante en particulier automatique des positions de consigne d'outils par rapport à la machine-outil pour un grand nombre de points de travail sur la pièce à usiner (101),
**caractérisé en ce que**
- au moyen d'un palpeur de mesure (7) seulement la distance maximale réelle du contour de pièce d'usinage à mesurer est déterminée, par exemple une surface de palier de levage (H₁) dans une direction de mesure (10), par exemple la direction X, par une valeur de référence, par exemple du milieu de rotation pour chaque position angulaire de mesure de la pièce à usiner (101), et
- au moins pour les positions angulaires de mesure, les positions respectives de consigne d'outil sont corrigées automatiquement d'une valeur de correction qui est calculée automatiquement à partir de la divergence respective calculée.

2. Procédé selon la revendication 1, **caractérisé en ce que** la pièce d'usinage (101) reste dans le serrage d'usinage pendant la mesure.

3. Procédé selon la revendication 1 ou 2, **caractérisé en ce que** des valeurs de correction sont définies en plus pour des positions intermédiaires se trouvant entre les positions de mesure angulaire par interpolation et la correction est effectuée.

4. Procédé pour l'une des revendications précédentes, **caractérisé en ce que** le palpeur de mesure (7) se déplace à l'aide du chariot (27, 28) portant directement l'outil ou de l'outil (WZ).

5. Procédé selon l'une des revendications précédentes, **caractérisé en ce que** l'outil n'est déplacé que dans une direction en particulier dans la direction de mesure (10) ou d'un mouvement de positionnement s'étendant transversalement.

6. Machine-outil avec
- au moins une broche (23, 24) pour le logement et pour l'entraînement de la pièce à usiner (101) autour de l'axe Z sur le centre de rotation,
- au moins une unité d'usinage (25, 26) pour le déplacement de l'outil par exemple une fraise à disque (5, 6) au moins dans le sens des X en fonction de la position de rotation de la broche de la pièce à usiner (axe C) et
- un dispositif de mesure (1) en particulier un dispositif de mesure de rotondité
- une commande de machine (35) qui commande les paramètres de position et de mouvement aussi bien de la pièce d'usinage que des unités d'outil,
**caractérisé en ce que**
- le dispositif de mesure (1) comprend des moyens afin de déterminer au moyen d'un palpeur de mesure (7) uniquement la distance actuelle maximale du contour de pièce d'usinage à mesurer d'une valeur de référence, par exemple le centre de rotation pour chaque position angulaire de mesure de la pièce d'usinage (101) et de déterminer pour chaque position angulaire de mesure la divergence mesurée entre la distance actuelle et la distance théorique et
- la commande de machine 835) présente des moyens pour corriger au moins, pour les positions de mesure, les positions respectives de consigne d'outil automatiquement d'une valeur de correction qui est calculée automatiquement à partir de la divergence respective mesurée,
- le dispositif de mesure (1) étant disposé directement sur le porte-outil.

7. Machine-outil selon la revendication 6, **caractérisée en ce que** le dispositif de mesure (1) est disposé directement sur l'outil (WZ) du porte-outil.

8. Machine-outil selon l'une des revendications précédentes, **caractérisée en ce que** le dispositif de mesure (1) est disposé directement sur le chariot X (27, 28) portant directement l'outil (WZ).

9. Machine-outil selon la revendication 8, **caractérisée en ce que** le dispositif de mesure (1) est fixé sur le porte-outil et est mobile en particulier de manière automatique entre une position de travail et une position de repos, en particulier basculable.

10. Machine-outil selon l'une des revendications précédentes, **caractérisée en ce que** le dispositif de mesure (1) comprend une surface de mesure (4) sur une colonne de mesure (4') et ainsi sur le palpeur de mesure (7) qui est orienté en angle droit à l'axe Z et en angle droit à la direction de mesure (10) qui est en particulier la direction X.

11. Machine-outil selon l'une des revendications précédentes, **caractérisée en ce que** le palpeur de mesure (7) avec la surface de mesure est disposé dans une position définie fixe par rapport au porte-outil dans le sens de mesure (10).

12. Machine-outil selon l'une des revendications précédentes, **caractérisée en ce que** lors de l'utilisation d'une fraise à disque (5, 6) en tant qu'outil, la surface de mesure (4, 4a) est disposée dans le plan du corps de base en forme de disque de l'outil (WZ) ou est décalée axialement et est disposée radialement à l'extérieur de la fraise à disque (5, 6) dans la position de travail.

13. Machine-outil selon l'une des revendications précédentes, **caractérisée en ce qu'**en cas de bras de mesure basculant (2), le bras de mesure (2) est basculant autour d'un axe de pivotement (3) qui s'étend transversalement au sens de meure (10) et transversalement au sens Z.

14. Machine-outil selon l'une des revendications précédentes, **caractérisée en ce que** l'outil est une tourelle porte-outils rotative ou une tourelle rotative de brochage et la surface de mesure est disposée dans le plan radial de la tourelle radialement à l'extérieur des outils dans la position de travail.

15. Machine-outil selon l'une des revendications précédentes, **caractérisée en ce que** la surface de mesure par exemple 4a est formée et disposée avec son contour parallèlement au contour externe dirigé dans la direction de mesure.
